# DEMANDE DE BREVET EUROPEEN

(11) **EP 1 419 868 A2**
(43) Date de publication de la demande: **19.05.2004**
(21) Numéro de dépôt: 03292774.1
(22) Date de dépôt: 05.11.2003
(51) Int. Cl.: B29C 45/14, B29C 45/26, B60R 13/02

(54) **Procédé d'inclusion d'un revêtement en médaillon sur une pièce en matière plastique**

(30) Priorité: 08.11.2002 FR 0214058
(71) Demandeur: Centre d'Etude et de Recherche pour l'Automobile ( CERA), 51100 Reims (FR)
(72) Inventeur: Noirot, Daniel, 02350 Liesse Notre Dame (FR)
(74) Mandataire: Derambure, Christian

(57) **Abrégé**

L'invention concerne un procédé d'inclusion d'un revêtement (1), notamment textile, en médaillon à la surface d'une pièce (2) en matière plastique, le procédé utilisant un moule comprenant une matrice, un poinçon mobile, et un organe prévu au voisinage de la périphérie de la matrice, ledit procédé comprenant les étapes prévoyant de :
- disposer le revêtement (1 ) sur la matrice ;
- activer les deuxièmes moyens d'actionnement vers une position de serrage qui est prévue pour associer la périphérie (13) du revêtement (1) sur la matrice avec possibilité de glissement de ladite périphérie (13) contre la matrice ;
- injecter la matière plastique (23) dans le volume d'injection ;
- activer les premiers moyens d'actionnement de sorte à déplacer le poinçon vers la position fermée en formant :
   - entre la matrice et le revêtement (1) la partie de la cavité de moulage correspondant au médaillon ; et
   - entre l'organe et le poinçon la partie de la cavité de moulage correspondant à la périphérie (10) de la pièce (2), ladite périphérie (10) étant formée par passage de la matière plastique (23) au travers du revêtement (1 ) ;
- démouler la pièce (2) obtenue.

L'invention concerne également un moule pour la mise en oeuvre de ce procédé, ainsi qu'une pièce en matière plastique obtenue par ce procédé avec des moyens d'assemblage intégrés dans la périphérie de ladite pièce.

## Description

L'invention concerne un procédé d'inclusion d'un revêtement, notamment textile, en médaillon à la surface d'une pièce en matière plastique, ainsi qu'un moule pour la mise en oeuvre de ce procédé et une pièce en matière plastique obtenue par un tel procédé.

De telles pièces sont en particulier destinées à l'habitacle d'un véhicule automobile, par exemple pour le garnissage de panneaux de porte. En effet, ces panneaux comprennent fréquemment des pièces en matières plastiques revêtues de textile, de sorte à améliorer l'aspect desdits panneaux.

On connaît déjà, notamment du document FR-2 720 319, un procédé d'inclusion d'un décor en médaillon à la surface d'une pièce en matière plastique. Toutefois, la mise en oeuvre de ce procédé nécessite des conditions de température et de pression qui sont susceptibles de détériorer le revêtement formant le décor.

Pour pallier cet inconvénient, l'invention propose un procédé d'inclusion permettant un contrôle optimal de la pression exercée sur le revêtement, de sorte à éviter tout risque de détérioration, en particulier lors de l'utilisation de revêtements fragiles.

En outre, la mise en oeuvre de ce procédé permet de limiter au maximum les pertes de matière, en ce que la surface de matière utilisée pour le revêtement correspond, à quelques millimètres près, à la surface visible correspondant au médaillon.

De plus, il est possible, grâce à ce procédé, d'inclure directement des organes fonctionnels dans la pièce en matière plastique, tels que des orifices permettant son assemblage au panneau de porte. Cette possibilité présente l'avantage d'éviter une étape ultérieure de découpe de la pièce, ce qui permet de réduire les coûts et d'augmenter la vitesse de production.

A cet effet, et selon un premier aspect, l'invention propose un procédé d'inclusion d'un revêtement, notamment textile, en médaillon à la surface d'une pièce en matière plastique, le procédé utilisant un moule comprenant une matrice et un poinçon mobile par l'intermédiaire de premiers moyens d'actionnement entre une position ouverte et une position fermée, et un organe prévu au voisinage de la périphérie de la matrice, ledit organe étant mobile par l'intermédiaire de deuxièmes moyens d'actionnement et étant agencé pour d'une part permettre l'association de la périphérie du revêtement sur la matrice et d'autre part délimiter la zone périphérique de la cavité de moulage, ledit procédé comprenant les étapes prévoyant de :
- disposer le revêtement sur la matrice, en regard du poinçon, de sorte à ménager un volume d'injection entre ledit revêtement et ladite matrice ;
- activer les deuxièmes moyens d'actionnement vers une position de serrage qui est prévue pour associer la périphérie du revêtement sur la matrice avec possibilité de glissement de ladite périphérie contre la matrice ;
- injecter la matière plastique dans le volume d'injection ;
- activer les premiers moyens d'actionnement de sorte à déplacer le poinçon vers la position fermée en formant :
   - entre la matrice et le revêtement la partie de la cavité de moulage correspondant au médaillon ; et
   - entre l'organe et le poinçon la partie de la cavité de moulage correspondant à la périphérie de la pièce, ladite périphérie étant formée par passage de la matière plastique au travers du revêtement ;
- démouler la pièce obtenue.

Selon un deuxième aspect, l'invention concerne un moule pour la mise en oeuvre d'un tel procédé, comprenant :
- une matrice fixe ;
- un poinçon mobile ;
- des premiers moyens d'actionnement du poinçon entre une position ouverte et une position fermée ;
- un organe formé d'une lunette qui comprend une partie faisant saillie vers l'intérieur du moule, ladite saillie comprenant une face en regard de la matrice qui est destinée à serrer la périphérie du revêtement contre une surface de ladite matrice, et une face agencée pour recevoir une partie du poinçon de sorte à délimiter la zone périphérique de la cavité de moulage ;
- des deuxièmes moyens d'actionnement agencés pour permettre le déplacement de l'organe.

Selon un troisième aspect, l'invention concerne une pièce en matière plastique comprenant, en médaillon, un revêtement textile, obtenue par ce procédé au moyen d'un tel moule, la périphérie de ladite pièce comprenant des orifices formant moyens d'assemblage.

D'autres objets et avantages de l'invention apparaîtront au cours de la description qui suit, faite en référence aux dessins annexés dans lesquels :
- la figure 1 est une représentation en coupe transversale d'un moule ouvert dans lequel le revêtement a été disposé, avant injection de la matière plastique ;
- la figure 2 est une représentation en coupe transversale du moule de la figure 1, en cours de fermeture, pendant l'injection de la matière plastique ;
- la figure 3 est une représentation en coupe transversale du moule de la figure 1 dans sa position fermée, après injection de la matière plastique ;
- la figure 4 est une vue agrandie de la périphérie du moule représenté sur la figure 3 ;
- la figure 5 est une représentation en coupe transversale du moule de la figure 1, en cours d'ouverture, après réalisation de la pièce en matière plastique pourvue d'un revêtement en médaillon ;
- la figure 6 est une vue en perspective de la pièce en matière plastique revêtue, obtenue par la mise en oeuvre des étapes du procédé représentées sur les figures 1 à 5.

Le procédé selon l'invention est destiné à inclure un revêtement 1 en médaillon à la surface d'une pièce 2 en matière plastique. Le revêtement 1 utilisé est notamment formé d'un matériau textile, perméable à la matière plastique. En particulier, ce procédé permet de réaliser une pièce 2 destinée à un panneau de porte de véhicule automobile.

Ce procédé utilise la technique d'injection compression. Cette technique consiste typiquement à injecter, dans un moule de compression, de la matière plastique destinée à servir de support au revêtement, puis à comprimer cette matière jusqu'à l'amener par fluage à remplir complètement le moule. En variante, l'injection et la compression peuvent être réalisées simultanément.

Le moule 3 utilisé dans le cadre de l'invention comprend une matrice 4 fixe, et un poinçon 5 mobile par l'intermédiaire de premiers moyens d'actionnement 6 entre une position ouverte et une position fermée.

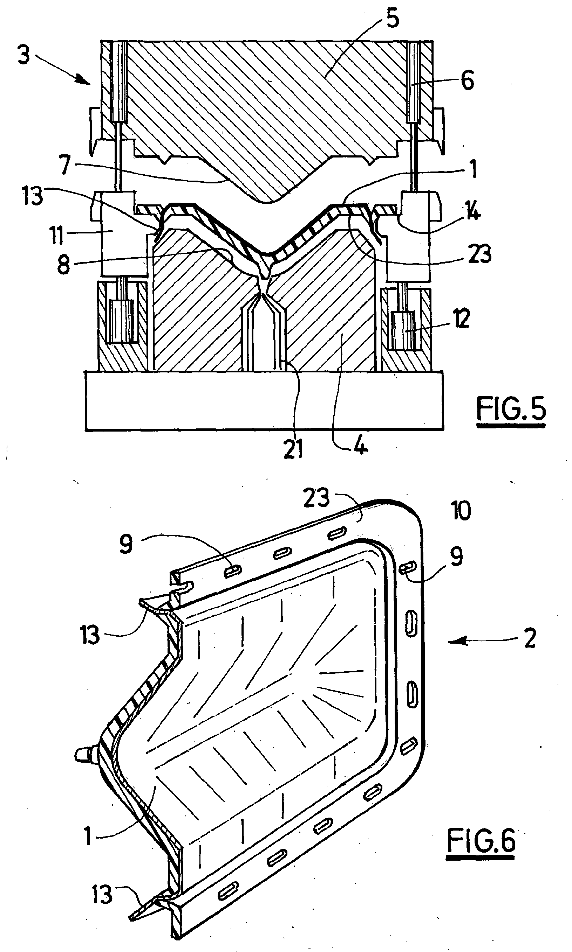

Selon la réalisation représentée, le poinçon 5 comprend une partie centrale 7 faisant saillie vers l'intérieur du moule 3, et destinée, lors de la fermeture du moule 3, à coopérer avec la partie centrale 8 de la matrice 4 de forme complémentaire. Cet agencement permet de réaliser une pièce 2 de forme adaptée à l'application souhaitée, telle que représentée sur la figure 6.

Selon une réalisation, le poinçon 5 peut comprendre des picots s'étendant vers l'intérieur du moule 3, et agencés pour réaliser des orifices 9 sur la périphérie 10 de la pièce 2 obtenue.

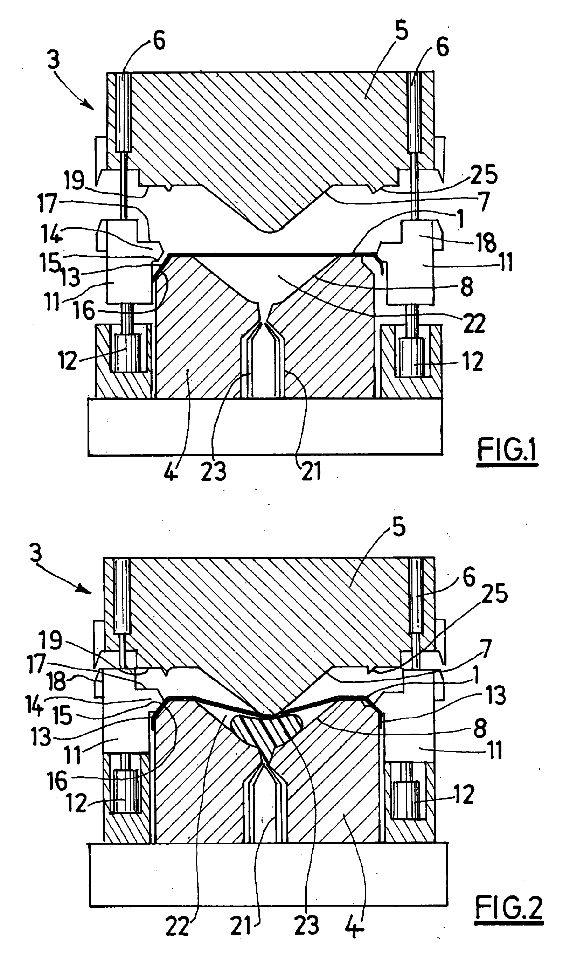

Le moule 3 comprend également un organe 11, formé dans le mode de réalisation représenté sur les figures 1 à 5 par une lunette, prévu au voisinage de la périphérie de la matrice 4. Cet organe 11 est mobile par l'intermédiaire de deuxièmes moyens d'actionnement 12.

Les premiers 6 et les deuxièmes 12 moyens d'actionnement sont ici formés de vérins. Ces vérins permettent de contrôler précisément la pression exercée respectivement par le poinçon 5 et l'organe 11 sur le revêtement 1, au cours de la mise en oeuvre du procédé.

L'organe 11, en l'occurrence la lunette, est agencé pour d'une part permettre l'association de la périphérie 13 du revêtement 1 sur la matrice 4, et d'autre part délimiter la zone périphérique de la cavité de moulage. A cet effet, la lunette 11 comprend une partie 14 faisant saillie vers l'intérieur du moule 3. Cette saillie 14 comprend une face 15 en regard de la matrice 4 qui est destinée à serrer la périphérie 13 du revêtement 1 contre une surface 16 de ladite matrice 4. Elle comprend également une autre face 17 formant un L avec une des extrémités 18 de la lunette 11, ladite face 17 étant agencée pour coopérer avec une partie 19 du poinçon 5 de sorte à délimiter la zone périphérique 20 de la cavité de moulage.

Le moule 3 représenté comprend également une buse d'injection 21 située en partie centrale de la matrice 4. Toutefois, en variante, on peut prévoir la présence de plusieurs buses d'injection réparties au sein de la matrice 4.

On décrit à présent, en relation avec les figures 1 à 5, les étapes du procédé selon l'invention, destiné à la réalisation d'une pièce 2 telle que celle représentée sur la figure 6.

Dans une première étape, représentée sur la figure 1, le revêtement 1 est disposé sur la matrice 4, en regard du poinçon 5, le moule 3 étant ouvert. Cette étape est réalisée de sorte à ménager un volume d'injection 22 entre le revêtement 1 et la matrice 4. A cet effet, le revêtement 1 est tendu entre les deux extrémités de la matrice 4, les bords du revêtement étant disposés le long des côtés de la matrice 4.

Les deuxièmes moyens d'actionnement 12 sont alors activés de sorte à déplacer la lunette 11 vers une position de serrage, en la rapprochant de la matrice 4. Cette étape est prévue pour associer la périphérie 13 du revêtement 1 sur la matrice 4, tout en gardant une possibilité de glissement de ladite périphérie 13 contre la matrice 4. A cet effet, l'effort de serrage imposé par la lunette 11 est défini de manière adaptée à chaque type de revêtement utilisé.

Puis l'injection de la matière plastique 23 est réalisée (voir figure 2). Selon le mode de réalisation représenté, cette injection est réalisée sensiblement en partie centrale du volume d'injection 22.

Au cours de l'injection, ou préalablement à celle-ci, les premiers moyens d'actionnement 6 sont activés de sorte à déplacer progressivement le poinçon 5 contre le revêtement 1. Le rapprochement du poinçon 5 contre le revêtement 1 est prévu de telle sorte que la matière plastique 23 injectée soit empêchée de traverser ledit revêtement 1 sur la zone de contact. En effet, les zones sur lesquelles le revêtement 1 est supporté forment des barrières d'étanchéité pour la matière plastique 23, évitant tout passage non souhaité de matière plastique 23 à travers le revêtement 1.

La pression exercée par le poinçon 5 sur le revêtement 1, au cours de son déplacement, entraîne non seulement le glissement du revêtement 1 le long des bords de la matrice 4, jusqu'à ce que celui-ci soit de géométrie correspondant au contour de la matrice 4, mais également la compression de la matière plastique 23 injectée, celle-ci étant alors amenée, par fluage, à remplir la cavité de moulage 24 située sous le revêtement 1, qui correspond au médaillon souhaité.

Il est à préciser que le glissement de la périphérie 13 du revêtement 1 contre les bords de la matrice 4 est rendu possible grâce à la valeur de l'effort de serrage imposé par la lunette 11, qui est prévu pour ne pas bloquer le revêtement 1 entre ladite lunette 11 et ladite matrice 4.

Lorsque le poinçon 5 parvient au niveau de la lunette 11, toujours sous l'action des premiers moyens d'actionnement 6, il pousse celle-ci de sorte à la verrouiller dans une position de blocage du revêtement 1 contre la matrice 4. Dans cette autre position, l'effort de serrage imposé par la lunette 11 sur le revêtement 1 est maximal, de telle sorte que ledit revêtement 1 est alors bloqué entre la matrice 4 et la lunette 11.

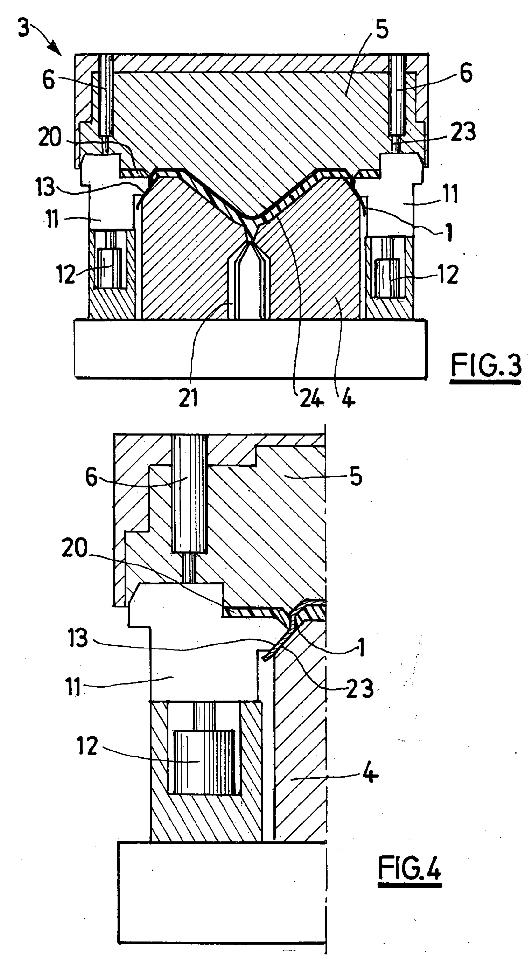

Les géométries respectives du poinçon 5 et de la saillie 14 de la lunette 11 sont prévues pour permettre, en fin de course, la formation d'une partie 20 de la cavité de moulage, cette partie 20 étant située entre le poinçon 5 et la lunette 11 (voir figures 3 et 4). Ainsi, à la fermeture complète du moule 3, la matière plastique 23 injectée ne peut que traverser le revêtement 1 pour venir remplir cette cavité, qui correspond à la périphérie 13 de la pièce 2. De plus, la zone de contact entre le poinçon 5 et la lunette 11 forme chambre de compression, ce qui permet d'étanchéifier la cavité et d'éviter ainsi toute fuite incontrôlée de matière.

Selon la réalisation représentée, le poinçon 5 comprend une saillie 25 agencée pour former une chicane dans la cavité de moulage, au niveau de la zone où le plastique traverse le revêtement 1. Ainsi, la matière 23 traversant le revêtement 1 est obligée de contourner cette saillie 25, ce qui permet d'améliorer l'écoulement de ladite matière 23 dans la partie de la cavité de moulage destinée à former la périphérie 10 de la pièce 2.

Après injection totale de la matière plastique 23, le moule 3 est ouvert, tel que représenté sur la figure 5, de sorte à pouvoir éjecter la pièce 2 dont la surface est pourvue du revêtement 1 en médaillon.

Un exemple d'une telle pièce est représentée sur la figure 6. Une fois montée sur la portière du véhicule automobile, seule la partie revêtue est visible depuis l'intérieur de l'habitacle. La partie périphérique 13 du revêtement 1, située sur la face non visible de la pièce 2, présente l'avantage d'être de surface peu importante.

En outre la périphérie 10 de la pièce 2, en matière plastique, peut intégrer des moyens d'assemblages. Selon le mode de réalisation représenté sur la figure 6, ces moyens d'assemblages sont des orifices 9, qui ont été formés par les picots éventuellement prévus sur le poinçon 5. Cette réalisation permet d'assembler directement la pièce 2 sortant du moule 3 sur la portière du véhicule pourvue des moyens d'assemblage réciproques, et ce sans étape intermédiaire de découpe.

En variante, les moyens d'assemblage sont formés d'organes saillants destinés à venir s'engager dans des orifices complémentaires prévus sur la portière du véhicule, de sorte à associer ladite pièce à ladite portière.

## Revendications

1. Procédé d'inclusion d'un revêtement (1 ), notamment textile, en médaillon à la surface d'une pièce (2) en matière plastique, le procédé utilisant un moule (3) comprenant une matrice (4) et un poinçon (5) mobile par l'intermédiaire de premiers moyens d'actionnement (6) entre une position ouverte et une position fermée, et un organe (11 ) prévu au voisinage de la périphérie de la matrice (4), ledit organe (11 ) étant mobile par l'intermédiaire de deuxièmes moyens d'actionnement (12) et étant agencé pour d'une part permettre l'association de la périphérie (13) du revêtement (1) sur la matrice (4) et d'autre part délimiter la zone périphérique (20) de la cavité de moulage, ledit procédé comprenant les étapes prévoyant de :
- disposer le revêtement (1) sur la matrice (4), en regard du poinçon (5), de sorte à ménager un volume d'injection (22) entre ledit revêtement (1) et ladite matrice (4) ;
- activer les deuxièmes moyens d'actionnement (12) vers une position de serrage qui est prévue pour associer la périphérie (13) du revêtement (1) sur la matrice (4) avec possibilité de glissement de ladite périphérie (13) contre la matrice (4) ;
- injecter la matière plastique (23) dans le volume d'injection (22) ;
- activer les premiers moyens d'actionnement (6) de sorte à déplacer le poinçon (5) vers la position fermée en formant :
- entre la matrice (4) et le revêtement (1) la partie (24) de la cavité de moulage correspondant au médaillon ; et
- entre l'organe (11 ) et le poinçon (5) la partie (20) de la cavité de moulage correspondant à la périphérie (10) de la pièce (2), ladite périphérie (10) étant formée par passage de la matière plastique (23) au travers du revêtement (1) ;
- démouler la pièce (2) obtenue.

2. Procédé selon la revendication 1, **caractérisé en ce que** l'injection de la matière plastique (23) est réalisée sensiblement en partie centrale du volume d'injection (22).

3. Procédé selon la revendication 1 ou 2, **caractérisé en ce que**, lors ou préalablement à l'injection, les premiers moyens d'actionnement (6) sont activés de sorte à déplacer le poinçon (5) contre le revêtement (1).

4. Procédé selon l'une des revendications 1 à 3, **caractérisé en ce que**, en position fermée, le poinçon (5) interagit avec l'organe (11) de sorte à le verrouiller dans une position de blocage du revêtement (1) contre la matrice (4).

5. Moule pour la mise en oeuvre du procédé selon l'une des revendications 1 à 4, **caractérisé en ce qu'**il comprend :
- une matrice fixe (4) ;
- un poinçon mobile (5) ;
- des premiers moyens d'actionnement (6) du poinçon (5) entre une position ouverte et une position fermée ;
- un organe (11) formé d'une lunette qui comprend une partie (14) faisant saillie vers l'intérieur du moule (3), ladite saillie (14) comprenant une face (15) en regard de la matrice (4) qui est destinée à serrer la périphérie (13) du revêtement (1) contre une surface (16) de ladite matrice (4), et une face (17) agencée pour recevoir une partie (19) du poinçon (5) de sorte à délimiter la zone périphérique (20) de la cavité de moulage ;
- des deuxièmes moyens d'actionnement (12) agencés pour permettre le déplacement de l'organe (11 ).

6. Moule selon la revendication 5, **caractérisé en ce que** le poinçon (5) comprend une saillie (25) agencée pour former une chicane dans la cavité de moulage, au niveau de la zone où la matière plastique (23) traverse le revêtement (1 ).

7. Moule selon la revendication 5 ou 6, **caractérisé en ce qu'**il comprend au moins une buse d'injection (21) située en partie centrale de la matrice (4).

8. Moule selon l'une des revendications 5 à 7, **caractérisé en ce que** les premiers (6) et les deuxièmes moyens d'actionnement (12) sont formés de vérins.

9. Moule selon l'une des revendications 5 à 8, **caractérisé en ce que** le poinçon (5) comprend des picots agencés pour réaliser des orifices (9) sur la périphérie (10) de la pièce (2) obtenue.

10. Pièce (2) en matière plastique comprenant, en médaillon, un revêtement textile (1), obtenue par un procédé selon l'une des revendications 1 à 4 au moyen d'un moule (3) selon l'une des revendications 5 à 9, **caractérisée en ce que** la périphérie (10) de ladite pièce (2) intègre des moyens d'assemblage.
